# EUROPEAN PATENT APPLICATION

(11) **EP 3 042 852 A1**
(43) Date of publication of application: **13.07.2016**
(21) Application number: 16150728.0
(22) Date of filing: 11.01.2016
(51) Int. Cl.: B64D 11/06

(54) **IMPROVED FOLDING TABLE, HAVING AN INTEGRATED POCKET FOR HOUSING MAGAZINES, FOR A SEAT, PREFERABLY AIRPLANE SEAT**

(30) Priority: 09.01.2015 IT RM20150009
(71) Applicant: Geven S.p.A., 80035 Nola (NA) (IT)
(72) Inventor: VENERUSO, Getullio, 80055 NOLA (NA) (IT)
(74) Representative: Mulas, Chiara

(57) **Abstract**

The present invention relates to a folding table (11) structure (10) having an integrated pocket (12) for housing magazines, for a seat, preferably an airplane seat, said seat having a seat-back (1), said structure (10) being apt to being rearwardly coupled to said seat-back (1), said table (11) having a first face apt to being turned towards the seat-back (1) and a second face apt to being turned opposite to said seat-back (1), said table (11) being apt to being hinged in its bottom portion to said seat-back (1), so that it is arranged in a position of not use, wherein said second face is in proximity of said seat-back (1) and a position of use, said table (11) being characterized in that said pocket (12) is provided coupled to said table (11) in correspondence of its second face, said pocket (12) being hinged at its bottom on said table (11), in order to be in a closed position, for housing magazines and similar, in correspondence of which it is substantially coupled to said second face of said table (11), and an opening position, in which it is possible to access the material contained therein.

## Description

The present invention relates to an improved folding table, having an integrated pocket for housing magazines, for a seat, preferably airplane seat.

More specifically, the invention relates to a folding table of the type mentioned, designed especially for seats for short and medium range aircraft, allowing to better exploit the space available for the passenger.

As it is known, more and more reduced space between a seat row and the following one, in particular in short and medium range aircraft for, has led the airplane seat manufacturers to focus the research towards solutions that allow to maximize the space available for the knees of the passenger.

Among the solutions that have been studied in recent years, there are those who focus on the strategic positioning of the pocket for magazines, moving it from the lower to the upper area of the seat backrest, where usually there is also installed the folding table.

The design concepts that are currently the most followed by aircraft seats manufacturers are essentially those involving:
i) no overlap between the table and pocket magazine pocket, and
ii) a partial overlap between the table and the magazine pocket, with the pocket located between the table and the structure of the backrest.

As it is known to everybody, the height of the backrest is limited by aviation regulations, thus the first case requires the use of a small table, very reduced in height, or positioned in a very low position, such a requirement still representing an obstacle during its use for the knees of the passenger.

The second solution of partial overlap between table and pocket, however, requires that the contents of the pocket are hidden when the table is closed and also imposes a greater total thickness of the backrest.

In view of the above, the Applicant has realized and developed the solution proposed according to the present invention, which allows to solve the problems of the known solutions.

These and other results are obtained according to the present invention proposing an improved folding table, which integrates, in its outer face, i.e. the one that in the rest position is faced toward the passenger, a pocket for magazines, that can be opened independently from the table.

It is therefore specific object of the present invention a folding table structure, having an integrated pocket for housing magazines, for a seat, preferably an airplane seat, said seat having a seat-back, said structure being apt to being rearwardly coupled to said seat-back, said table having a first face apt to being turned towards the seat-back and a second face apt to being turned opposite to said seat-back, said table being apt to being hinged in its bottom portion to said seat-back, so that it is arranged in a position of not use, wherein said second face is in proximity of said seat-back and a position of use, said table being characterized in that said pocket is provided coupled to said table in correspondence of its second face, said pocket being hinged at its bottom on said table, in order to be in a closed position, for housing magazines and similar, in correspondence of which it is substantially coupled to said second face of said table, and an opening position, in which it is possible to access the material contained therein.

Particularly, according to the invention, said table structure can provide a closing device suitable to be provided on said seat-back, in order to respectively allow blocking said table in said position of not use, and releasing it in order to be in said position of use.

Always according to the invention, returning means can be provided in order to facilitate the transition of said pocket from said opening position to said closed position, and vice versa.

Still according to the invention, said returning means can be configured in order to exert a constant force on said pocket keeping it in said closed position, until a higher counter-force is exerted on said pocket in order to bring it in said opening position.

Alternatively, according to the invention, said returning means can be is configured in order to block said pocket in said opening position or in said closed position by means of an action exerted on said pocket.

Further, according to the invention, said table structure can comprise a security system acting on said pocket in order to pass between a blocking position, in which it blocks the opening of said pocket in relation to said table when said table is in the position of use, and a release position, in which it allows the opening/closing of said pocket in relation to said table when said table is in said position of not use.

Further, according to the invention, said security system can comprise first thrust means apt to being integral to said seat-back, first coupling means integral to said pocket, blocking/unblocking means housed in said table and comprising a first and a second arm, and second thrust means, acting on said second arm, said security system being configured so that when it is in said blocking position and said pocket is in said closed position, the acting force on said second arm keeps coupled said coupling means with said second arm, preventing the opening of said pocket in relation to said table, and so that when it is in said release position said first thrust means act on said first arm with a counter-force acting on said second arm causing the disengagement of said second arm from said coupling means, allowing the action of opening/closing of said pocket in relation to said table.

Still according to the invention, said security system can be connected to said closing device of said table.

Always according to the invention, said pocket can be made of transparent material.

Preferably, according to the invention, said table and said pocket can each have a complementary C cross-section.

Finally, said table can provide a top opening or grip and/or a bottom longitudinal groove.

Further, it is an object of the present invention a backrest for a seat, preferably an airplane seat, comprising a table structure as described in the above.

The present invention will be now described, for illustrative but not limitative purposes, according to its preferred embodiments, illustrated in the figures of the enclosed drawings, wherein:
figure 1 is a perspective view of the backrest of a seat provided with a table structure according to the invention in a first embodiment, provided with the table in a first non-use position and with the pocket in a first closed position;
figure 2 is a second perspective view of the table structure of figure 1 with the pocket in a second open position;
figure 3 is a third perspective view of the table structure of figure 1 with the table in a second position of use;
figure 4 is a section side view of the table structure of figure 3;
figures 5a and 5b are section side views of the table structure, respectively, of figure 1 and figure 2;
figure 6 is a section side view of the backrest of a seat provided with a table structure of the invention according to a second embodiment, provided with a table in a second use position and a pocket in a first closure position;
figures 7a and 7b respectively show a section side view of the table structure according to the invention in a third embodiment, provided with a table in a first non-use position and a pocket in a first closed position and in a second open position;
figure 8 shows a section view of the table structure of figures 7a and 7b, with the table in a second use position and the pocket in said first closed position; and
figures 9a and 9b respectively show section side views of a detail of the table structure of figure 7a, provided with a safety system respectively in the unlocked and locked position.

Observing the enclosed figures, there is shown a backrest 1 for a seat, particularly for an airplane seat, which provides an integrated table - magazine pocket structure, generally indicated by the reference number 10.

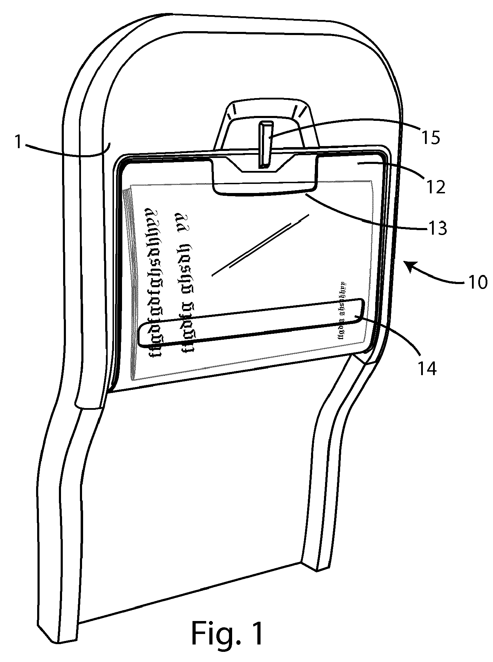

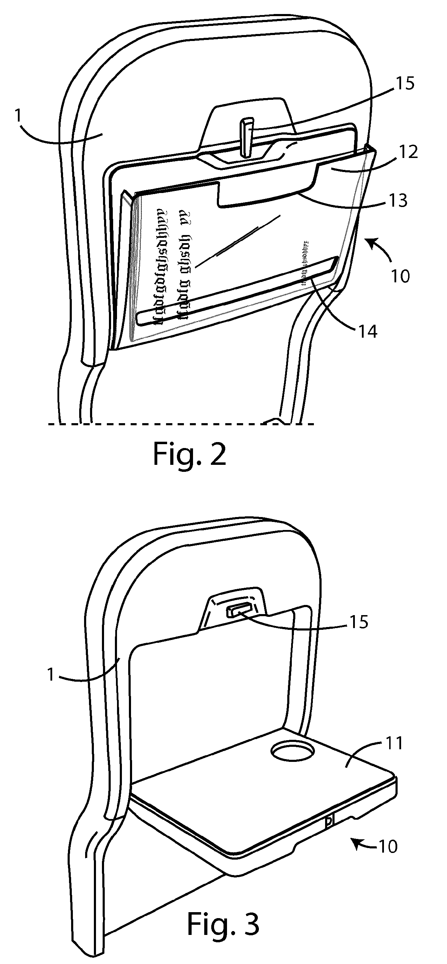

As it can be observed, the structure 10 has a table 11 (see in particular figure 3) and a pocket 12 for housing magazines. The table 11 is able to pass from a non-use position, such as shown in figures 1 and 2, wherein the first face of the table 11 facing towards the backrest 1 is close to the rear surface of the backrest 1, and preferably inserted in a housing formed in the rear portion of the backrest 1, to a use position, e.g. as shown in figure 3, in which the table 11 is substantially perpendicular to the backrest 1 to allow a user to place objects on the table 11, such as a tray to eat.

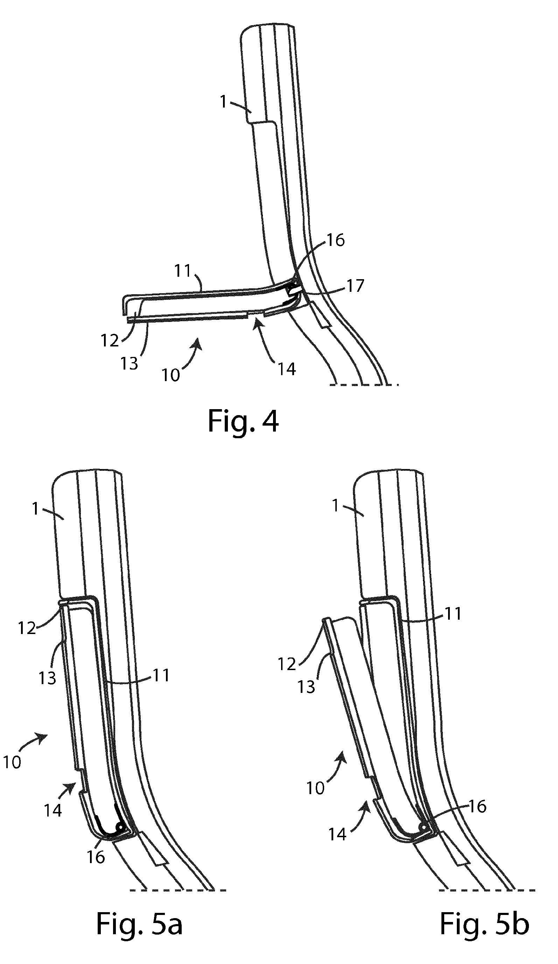

In particular, the magazine pocket 12, preferably made of transparent material, to be able to see from the outside the magazines contained in it, is pivoted below the table 11 in correspondence of the second face of the same table 11 faced opposite to said backrest 1, in such a way that it can be opened independently from the table 11 itself, in order to have access to its contents. In particular, the pocket 12 is pivoted to said table 11 in such a way assume a closed position (shown for example in Figure 5a), for the containment of magazines and like, in which it is substantially coupled with said second face of the table 11, and an open position (shown for example in Figure 5b), in which it is possible to obtain access to the material contained in it.

The table 11 can be locked in a non-use position by a closure 15, in particular a latch, pivoted on the same backrest 1.

In figures 2 and 5a - 5b it is shown in particular the opening and closure function of of the pocket 12 with respect to the table 11, said function occurring by using an opening or grip 13, preferably formed in the upper portion of the pocket 12. This function is allowed by an interlocking coupling with the outer surface of the table 11, and is facilitated by return means 16, in particular a spring 16, preferably arranged inferiorly between the table 11 and the pocket 12, and having the function of keeping the two parts joined.

The action of the spring 16, in particular, ensures the closure of the pocket 12 with respect to the table 11.

The spring 16 may be of different types:
- it can exert a constant action to close the pocket 12, when the user exerts a higher and opposite force on the grip 13 of the pocket 12, or
- it can ensure the locking in a double position of the pocket, thus in the first closed position, shown in Figure 5a, and in the second opening position, shown in figure 5b.

The first type of spring 16 ensures a continue closure of the pocket 12, allowing cabin crew not to have to worry about the opening/closing of the pocket after landing. However, for a comfortable use, it requires the action of two hands, one to keep open the pocket 12, preferably through the grip 13, and the other to pick up/insert the content, such as magazines.

The second type of spring 16 ensures the locking in the two closing and opening positions of the pocket 12, thus permitting both magazine pick up/insert operations and pocket 12 cleaning operations being carried out with only one hand.

It is evident that the coupling and uncoupling of the pocket 12 on the table 11 can be obtained with other equivalent mechanical means.

Apart from the return means 16 described above, the structure 10 according to the invention can be provided with a safety system 18, able to prevent the opening of the pocket 12 when the table 11 is in the use position. The purpose is to avoid that the pocket 12 can open without control, neither accidentally, under the gravity action or in case of turbulence when the table 11 is in the use position of use.

Said safety system 18 acts on said pocket 12, so as to move between a locking position, in which it blocks the opening of the pocket 12 with respect to the table 11 when the table 11 is in the use position, and an unlocking position , in which it allows the opening/closing of the pocket 12 with respect to the table 11 when the table 11 is in the non-use position.

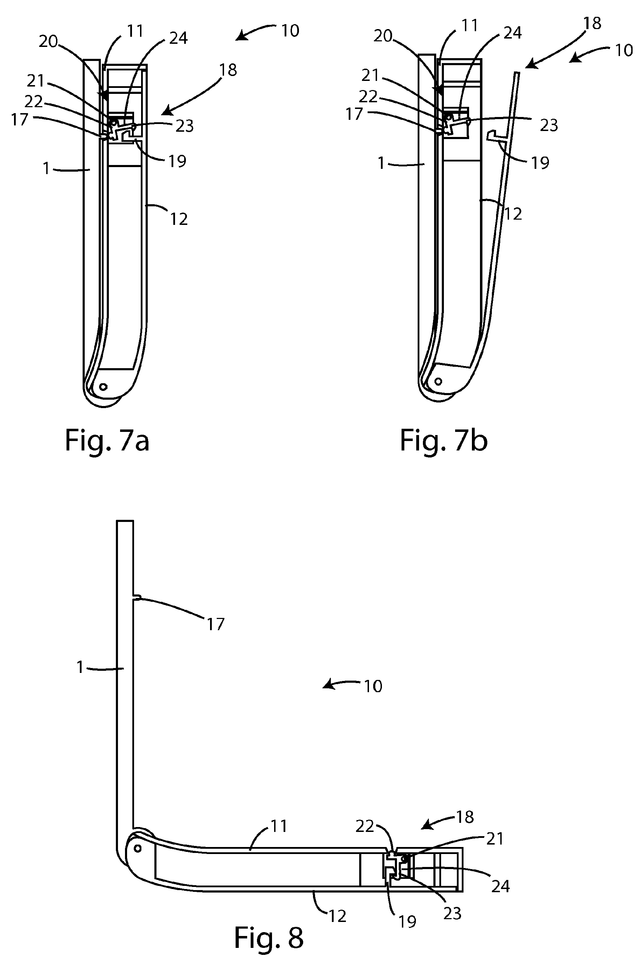

In particular, as shown in figures 7a - 9b, said safety system 18 may include a first projection or pin 17 integral with the backrest 1, projecting in the direction of the surface of the table 11, a second projection or pin 19 integral with the inner surface of the pocket 12 and projecting in the direction of the surface of the table 11, a latch 20, provided in the table 11, in an intermediate position between the outer surface of use of the table 11 and the inner surface of the pocket 12. The latch 20 comprises a first 22 and a second 23 arm and is able to rotate with respect to a pin 21, integral with said table 11. In addition, the security system 18 comprises thrust means 24, particularly a spring 24, acting on said second arm 23 of said latch 20.

Said second arm 23 and said second projection 19 have the ends shaped in such a way to be able to engage each other.

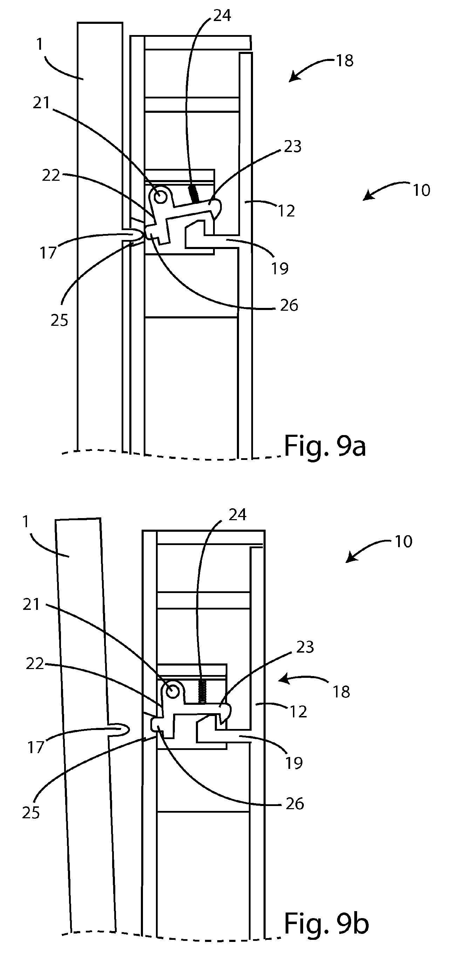

Said safety system 18 is configured in such a way that, when it is in the locked position and the pocket 12 is in the closed position, the force acting on the second arm 23 keeps the same second arm 23 engaged with said second projection 19 of said pocket 12 ( as shown in figures 8 and 9b) by means of the coupling between the shaped ends of said second projection 19 with said second arm 23, thus preventing the opening of the pocket 12 with respect to the table 11, and so that when in unlocking position (shown in figures 7a, 7b and 9a), said first projection 17 acts on the first arm 22 of the latch 20 with a force opposite with respect to the force acting on said second arm 23, causing the rotation of said latch 20 with respect to the pin 21 and causing the disengagement of said second arm 23 from said second projection 19, allowing the action of opening/closing of the pocket 12 with respect to the table 11.

In case the latch 20 is provided on the first face of the table 11, it can be provided a hole 25 in said first face of the table 11 in correspondence of the first arm 22 of the latch 20 and in correspondence with the first projectioon 17 of the backrest 1 when the table 11 is in the non-use position, so that the first projection 17 can enter into said hole 25 and come into contact with the first arm 22, possibly provided with a projection 26 in correspondence of said hole 25, to allow a direct contact with the first projection 17.

Such a safety system 18 therefore advantageously prevents accidental opening of the pocket 12 when the table 11 is in the use position.

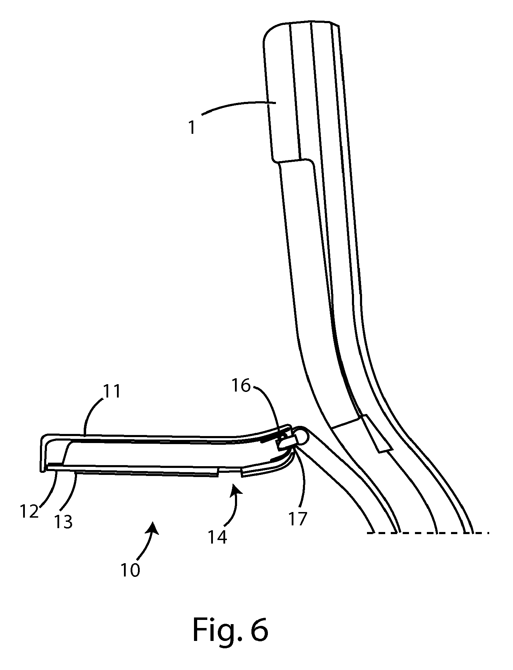

In other embodiments, said safety system 18 can be connected to the mechanism for opening/closing the latch 15 of the table 11, which can be connected to the first projection 17 of the mechanism, to prevent the rotation movement of the pocket 12 with respect to the table 11 (as shown in figure 4), or from another system interposed between the table 11 and the rotation rods of the table 11 in the case of reclining backrest (as shown in figure 6).

The structure 10 according to the invention is thus absolutely reliable because it is very simple, it does not require any additional maneuver with respect to conventional systems used to lock the tables at the back of the seat backrest.

The object-holder pocket 12 can also have a longitudinal lower slot 14, which advantageously allows to verify if objects are within the pocket 12.

The table 11 is preferably realised by means of a composite technology, while the pocket 12 is preferably realized by means of a plastic injection technology.

Both the table 11 and the pocket 12 preferably have a C-shaped section, complementary each other, in such a way that the side edge of the pocket 12 is housed within the side edge of the table 11.

It is clearly noted that the lower part 2 of the backrest 1 is completely free, thereby leaving more space for the knees of the passenger sitting in the back seat.

In addition, the structure 10 of integrated table 11 - magazine pocket 12 allows to have a table 11 of optimum size, and at such a height not to interfere with the knees of the passenger, and a pocket 12 which can be reached easily from outside, and with a constant view of the contents of the pocket 1 itself.

In detail, the advantages that are obtained with the solution according to the invention are:
- maximum space available for both the table 11 and the pocket 12;
- possibility of positioning the table 11 without any constraint, including the ability to place it in a position high enough to avoid the need to adopt complex structures;
- possibility of using a transparent coating for the pocket 12, in such a way as to allow to have a complete visibility of the magazines from the outside;
- less space occupied in the backrest 1, space that can be used both to provide more space for the passenger, that for a different destination;
- ease of cleaning of the magazine pocket 12; and
- reduced thickness of the backrest 1.

The present invention has been described, for illustrative, but not limitative, purposes, according to its preferred embodiments, but it is to be understood that variations and/or modifications can be introduced by those skilled in the art without departing from the relevant scope as defined in the enclosed claims.

## Claims

1. Folding table (11) structure (10), having an integrated pocket (12) for housing magazines, for a seat, preferably an airplane seat, said seat having a seat-back (1), said structure (10) being apt to being rearwardly coupled to said seat-back (1), said table (11) having a first face apt to being turned towards the seat-back (1) and a second face apt to being turned opposite to said seat-back (1), said table (11) being apt to being hinged in its bottom portion to said seat-back (1), so that it is arranged in a position of not use, wherein said second face is in proximity of said seat-back (1) and a position of use, said table (11) being **characterized in that** said pocket (12) is provided coupled to said table (11) in correspondence of its second face, said pocket (12) being hinged at its bottom on said table (11), in order to be in a closed position, for housing magazines and similar, in correspondence of which it is substantially coupled to said second face of said table (11), and an opening position, in which it is possible to access the material contained therein.

2. Table (11) structure (10) according to claim 1, **characterized in** providing a closing device (15) apt to being arranged on said seat-back (1) in order to respectively allow blocking said table (11) in said position of not use, and releasing it in order to be in said position of use.

3. Table (11) structure (10) according to any one of the previous claims, **characterized in that** returning means (16) are provided in order to facilitate the transition of said pocket (12) from said opening position to said closed position, and vice versa.

4. Table (11) structure (10) according to the previous claim, **characterized in that** said returning means (16) is configured in order to exert a constant force on said pocket (12) keeping it in said closed position, until a higher counter-force is exerted on said pocket (12) in order to bring it in said opening position.

5. Table (11) structure (10) according to claim 3, **characterized in that** said returning means (16) is configured in order to block said pocket (12) in said opening position or in said closed position by means of an action exerted on said pocket (12).

6. Table (11) structure (10) according to any one of the previous claims, **characterized in** further comprising a security system (18) acting on said pocket (12) in order to pass between a blocking position, in which it blocks the opening of said pocket (12) in relation to said table (11) when said table (11) is in the position of use, and a release position, in which it allows the opening/closing of said pocket (12) in relation to said table (11) when said table (11) is in said position of not use.

7. Table (11) structure (10) according to the previous claim, **characterized in that** said security system (18) comprises first thrust means (17) apt to being integral to said seat-back (1), first coupling means (19) integral to said pocket (12), blocking/unblocking means (20) housed in said table (11) and comprising a first (22) and a second arm (23), and second thrust means (24), acting on said second arm (23), said security system (18) being configured so that when it is in said blocking position and said pocket (12) is in said closed position, the acting force on said second arm (23) keeps coupled said coupling means (19) with said second arm (23), preventing the opening of said pocket (12) in relation to said table (11), and so that when it is in said release position said first thrust means (17) act on said first arm (22) with a counter-force acting on said second arm (23) causing the disengagement of said second arm (23) from said coupling means (19), allowing the action of opening/closing of said pocket (12) in relation to said table (11).

8. Table (11) structure (10) according to any one of the claims 6 or 7, when depending from claim 2, **characterized in that** said security system is connected to said closing device (15) of said table (11).

9. Table (11) structure (10) according to any one of the previous claims, **characterized in that** said pocket (12) is made of transparent material.

10. Table (11) structure (10) according to any one of the previous claims, **characterized in that** said table (11) and said pocket (12) each have a complementary C cross-section.

11. Table (11) structure (10) according to any one of the previous claims, **characterized in that** said table (11) provides a top opening or grip (13) and/or a bottom longitudinal groove (14).

12. Backrest (1) for a seat, preferably an airplane seat, comprising a table (11) structure (10) as claimed in any one of the claims 1 -11.
